# EUROPÄISCHE PATENTSCHRIFT

(11) **EP 0 822 348 B1**
(45) Veröffentlichungstag und Bekanntmachung des Hinweises auf die Patenterteilung: **23.10.2002**
(21) Anmeldenummer: 97112663.6
(22) Anmeldetag: 24.07.1997
(51) Int. Cl.: F16B 45/02

(54) **Karabinerhaken**
Snaphook
Mousqueton

(30) Priorität: 02.08.1996 AT 138896
(43) Veröffentlichungstag der Anmeldung: 04.02.1998
(73) Patentinhaber: ABA Hörtnagl KG Werkzeuge - Vorrichtungen, 6166 Fulpmes (AT)
(72) Erfinder: Hörtnagl, Johann, 6166 Fulpmes (AT)
(74) Vertreter: Hefel, Herbert, Dipl.-Ing.

(56) Entgegenhaltungen:
- EP-A- 0 569 059
- EP-A- 0 696 687
- DE-A- 1 625 874
- DE-A- 3 827 334

## Beschreibung

Die Erfindung bezieht sich auf einen Karabinerhaker gemäß dem Oberbegriff des Anspruchs.

Ein Karabinerhaken dieser Art ist aus der EP-A-696687 bekannt geworden. Bei Karabinerhaken gemäß der EP-B- 289 490 B1 und EP-A- 606 808 A1 ist das den Steg mit den Auskragungen aufweisende Ende im Querschnitt T-förmig ausgebildet, wobei sich diese Querschnittsform über den Durchmesser des Profils erstreckt. Die dieses Ende aufnehmende Ausnehmung ist so bemessen, daß der Steg mit den seitlichen Auskragungen von dieser Ausnehmung mit Spiel aufgenommen werden kann, wenn sich der Schließteil in der Schließstellung befindet und der Karabinerhaken unbelastet ist. Unter Last wird der C-förmige Hakenteil etwas aufgeweitet mit der Folge, daß dadurch die Auskragungen des Steges an den Schultern der Ausnehmung sich anlegen, wobei sowohl die Schultern wie auch die Auskragungen in der Bewegungsebene des Schließteiles lineare Erstreckungen aufweisen. Da die Last hinsichtlich ihrer Größe in der Regel variiert, und damit die Verformung des C-förmigen Hakenteiles, führen die erwähnten, aneinander liegenden Teile Kippbewegungen zueinander aus, was zu örtlich hohen Beanspruchungen führt, die plastische Deformationen der beanspruchten Stellen bewirken, da die aneinander liegenden Flächen relativ klein, die auf sie einwirkenden Kräfte aber sehr groß sind. Solche plastische Deformationen können den Karabinerhaken unbrauchbar machen.

Eine unterschiedliche Art von Karabinerhaken ist beispielsweise aus der EP 569 059 A2 bekannt. Hier sind am freien Ende des Schließteils hakenartige Elemente vorgesehen, die im geschlossenen Zustand des Karabinerhakens in entsprechende Ausnehmungen im Ende des Hakenteils eingreifen. Nachteilig gegenüber der aus der EP 289 490 B1 und EP 606 808 A1 bekannten Art von Karabinern ist es bei dieser Art von Karabinern, daß sich ein Seil, insbesondere beim Einführen in den Karabinerhaken, an den hakenartigen Elementen des Schließteils verhängen kann, ebenso wie ein Klettergurt. Dies kann beispielsweise bei einem Kletterer, der sich bei der Benutzung des Karabinerhakens im schwierigen Gelände in einer extremen Lage befindet, zu einer Erschwernis für den Benutzer und dadurch zu einer Gefährdung führen.

Die Erfindung geht von einem Karabinerhaken der eingangs genannten Art aus und gestaltet ihn mittels der Merkmale des kennzeichnenden teils vorteilhaft um.

Um die Erfindung zu veranschaulichen, wird sie anhand der Zeichnung näher erläutert, ohne die Erfindung auf das gezeigte Ausführungsbeispiel einzuschränken. Es zeigen:
- Fig. 1: einen Karabinerhaken von der Seite gesehen;
- Fig. 2: die Ansicht des Steges mit den seitlichen Auskragungen - Blickrichtung Pfeil A in Fig. 1;
- Fig. 3: die Ansicht des stimseitigen Endes des Schließteiles - Blickrichtung Pfeil B in Fig. 1;
- Fig. 4: einen Vertikalschnitt durch das in Fig. 3 gezeigte, stirnseitige Ende nach der Schnittlinie IV-IV in Fig. 3;
- Fig. 5: den Schließteil in Schließstellung im Detail bei unbelastetem Karabinerhaken;
- Fig. 6: den Schließteil in Schließstellung im Detail bei belastetem Karabinerhaken.

Die Darstellungen haben unterschiedliche Maßstäbe.

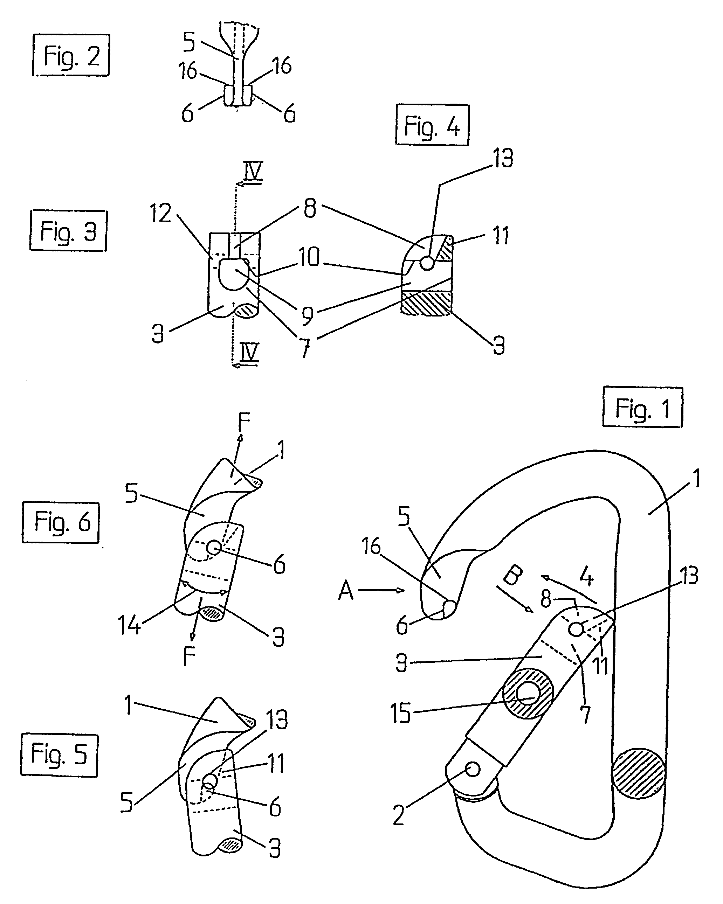

Der Karabinerhaken nach Fig. 1 besteht aus einem im wesentlichen C-förmigen, lastaufnehmenden Hakenteil 1, hier aus einem Rundprofil. Am einen Ende dieses Hakenteiles ist um eine Achse 2, die rechtwinkelig zur Ebene dieses Hakenteiles 1 steht, ein Schließteil 3 angelenkt mit einer zentralen Bohrung 15 zur Aufnahme eines federbelasteten Bolzens, der auf das durch die Achse 2 gebildete Lager einwirkt und den Schließteil 3 in Schließstellung hält bzw. den in Offenstellung befindlichen Schließteil 3 (Fig. 1) in seine Schließstellung drängt (Pfeil 4). Am Karabinerhaken können auch Verriegelungselemente vorgesehen sein, die den in Schließstellung befindlichen Schließteil sichern. Solche Verriegelungselemente sind bei Karabinerhaken dieser Art bekannt, hier aber wegen der Übersichtlichkeit nicht dargestellt.

Das freie Ende des Hakenteiles 1 ist zu einem Steg verjüngt, dessen Ebene mit der Mittelebene des Hakenteiles 1 zusammenfällt und der an seinem dem Schließteil 3 zugewandten Ende in symmetrischer Anordnung Zapfen 6 aufweist, wobei die axiale Erstreckung dieser Zapfen 6 kleiner ist als der Durchmesser der Profile. Zumindest die in Fig. 1 oben liegenden Abschnitte dieser Zapfen 6 sind als kreiszylindrische Abschnitte ausgebildet.

Zur Aufnahme dieses Steges 5 mit seinen symmetrisch auskragenden Zapfen 6 ist im freien Ende des Schließteiles 3 eine dazu korrespondierende Ausnehmung 7. Diese Ausnehmung besteht aus einem von der Stirnseite des Schließteiles 3 ausgehenden, achsmittig liegenden Schlitz 8 und einer daran anschließenden Verbreiterung 9. Beide Seiten des Schlitzes 8 gehen über Schultern 10 in die Verbreiterung 9 über. Der Schlitz 8 erstreckt sich nicht über die ganze Breite bzw. den gesamten Durchmesser des Schließteiles 3, vielmehr ist dieser Schlitz 8 so gestaltet, daß er von einem Anschlag 11 seitlich begrenzt ist. Diese Ausnehmung 7 ist von einer Bohrung 12 quer durchsetzt, deren Durchmesser etwa den Durchmessern der Zapfen 6 entspricht bzw. deren kreiszylindrische Abschnitte und deren Achse in der Ebene der Schultern 10 liegt, so daß diese Querbohrung 12 in den Schultern 10 rinnenförmige, nach unten offene, zylindrische Lagerschalen 13 bildet. Die Öffnungsweite dieser zylindrischen Lagerschalen 13 beträgt höchstens 180 ° oder etwas weniger.

Ist der Schließteil 3 dank der auf ihn einwirkenden Federkraft in Schließstellung und der Karabinerhaken unbelastet, so sind Lagerschalen 13 und Zapfen 6 voneinander etwas distanziert (Fig. 5). Das hier ersichtliche Spiel ist deswegen erforderlich, damit der Schließteil 3 in seine Schließstellung gelangen kann, wobei die Lage der hier miteinander in Wirkverbindung tretenden Teile durch den seitlichen Anschlag 11 vorgegeben ist.

Wird der Karabinerhaken belastet, so treten an ihm Kräfte (Pfeil F) auf, die den C-förmigen Hakenteil 1 etwas aufzuweiten versuchen mit der Folge, daß sich die Distanz zwischen Zapfen 6 und Lagerschalen 13 verkleinert, bis die Zapfen 6 in den Lagerschalen 13 liegen (Fig. 6). Dank der kreiszylindrischen Ausbildung der nun aneinander anliegenden Flächen kann sich unter Lastwechsel der eine Teil gegenüber dem andren etwas bewegen und verschwenken (Pfeil 14), ohne daß sich dadurch das Ausmaß der sich berührenden Flächen zwischen Zapfen 6 und Lagerschalen 13 ändert, so daß stets definierte geometrische Verhältnisse vorliegen und so örtliche Überbeanspruchungen mit unvermeidlichen plastischen Verformungen vermieden werden können, was zu erreichen Sinn und Zweck dieser Erfindung ist.

Beim gezeigten Ausführungsbeispiel ist der Steg 5 mit den Zapfen 6 am einen Ende des Hakenteiles 1 vorgesehen und die Ausnehmung 7 am Schließteil 3. Grundsätzlich ist es möglich, diese Anordnung umzudrehen, auch dann läßt sich der hier angestrebte Zweck erzielen.

### Legende zu den Hinweisziffern:

- 1: Hakenteil
- 2: Achse
- 3: Schließteil
- 4: Pfeil
- 5: Steg
- 6: Zapfen
- 7: Ausnehmung
- 8: Schlitz
- 9: Verbreiterung
- 10: Schulter
- 11: Anschlag
- 12: Bohrung
- 13: Lagerschale
- 14: Pfeil
- 15: Bohrung
- 16: Abschnitt

## Patentansprüche

1. Karabinerhaken mit einem im wesentlichen C-förmigen, lastaufnehmenden Hakenteil (1) und einem am einen Ende des Hakenteiles (1) in dessen Ebene schwenkbar gelagerten, durch Federkraft in Schließstellung gehaltenen Schließteil (3), der in der Schließstellung mit seinem freien Ende in das andere Ende des Hakenteiles (1) eingreift, wobei Hakenteil (1) und Schließteil (3) aus Profilen gefertigt sind und das eine der Enden einen gegenüber den Querschnittsabmessungen der Profile verjüngten Steg (5) aufweist mit seitlichen als Zapfen (6) ausgebildeten Auskragungen, wobei die axiale Erstreckung der Auskragungen quer zur Ebene des Steges (5) kleiner ist als der Durchmesser der Profile und das andere der Enden eine zur Aufnahme des Steges (5) und dessen Auskragungen vorgesehene Ausnehmung (7) mit einem Anschlag (11) zur Begrenzung der Schwenkbewegung des Schließteiles (3) aufweist und diese Ausnehmung (7) korrespondierend zum Längsschnitt des Steges (5) und dessen Auskragungen ausgebildet ist und einen von der Stirnseite des Endes ausgehenden, achsmittig liegenden Schlitz (8) und eine daran anschließende Verbreiterung (9) besitzt, deren in Richtung quer zur Längsausdehnung des Schließteils gemessener Durchmesser kleiner als der Durchmesser der Profile ist, **dadurch gekennzeichnet, daß** die in der Schließstellung dem Schlitz (8) gegenüberliegenden Abschnitte (16) der Auskragungen am Steg (5) als kreiszylindrische Abschnitte ausgebildet sind und in Schultern (10), über welche der Schlitz (8) in die Verbreiterung (9) übergeht zur Aufnahme und Anlage dieser kreiszylindrischen Abschnitte (16) korrespondierend dazu ausgebildete, rinnenartige Lagerschalen (13) ausgeformt sind, wobei die rinnenartigen Lagerschalen (13) Teil einer Wandung einer die Ausnehmung (7) quer durchsetzenden, zylindrischen Bohrung (12) sind.

2. Karabinerhaken nach Anspruch 1, **dadurch gekennzeichnet, daß** der Steg (5) mit den seitlich auskragenden Zapfen (6) am einen Ende des Hakenteiles (1) und die dazu korrespondierende Ausnehmung (7) im schwenkbaren Riegelteil (3) vorgesehen sind.

3. Karabinerhaken nach Anspruch 1, **dadurch gekennzeichnet, daß** die Bohrung (12) einen Durchmesser besitzt, der dem Durchmesser der kreiszylindrischen Abschnitte der Zapfen (6) entspricht und die Achse der Bohrung (12) in oder etwas unterhalb einer die Schultern (10) aufweisenden Ebene liegt und die Öffnungsweite der rinnenartigen Lagerschale (13) höchstens 180 Winkelgrade beträgt.

4. Karabinerhaken nach einem der Ansprüche 1 bis 3, **dadurch gekennzeichnet, daß** bei unbelastetem Hakenteil (1) und bei in Schließstellung befindlichem Schließteil (3), in der der Steg (5) am Anschlag (11) anliegt, die Zapfen (6) und die rinnenartigen Schalen (13) voneinander distanziert sind und unter Belastung des Hakenteils (1) aneinander anlegbar sind.

## Claims

1. A snap hook comprising a substantially C-shaped, load-bearing hook part (1) and a closing part (3) mounted on one end of the hook part (1) so as to be pivotable in the plane thereof and held by spring force in the closed position, the free end of the closing part (3) engaging the other end of the hook part (1) in the closed position, wherein the hook part (1) and the closing part (3) are manufactured from sections, and one of the ends has a bridge piece (5) narrowed in relation to the cross-sectional dimensions of the sections and provided with lateral projections formed as pins (6), wherein the axial extent of the projections transversely to the plane of the bridge piece (5) is smaller than the diameter of the sections, and the other of the ends has a recess (7) for receiving the bridge piece (5) and its projections and provided with a stop (11) for limiting the pivotal movement of the closing part (3), and this recess (7) is formed so as to correspond to the longitudinal section of the bridge piece (5) and its projections and comprises an axially centrally arranged slot (8), starting from the front face of the end, and an adjoining widened portion (9), the diameter of which, measured transversely to the longitudinal extent of the closing part, is smaller than the diameter of the sections, **characterised in that** the portions (16) of the projections on the bridge piece (5) opposite the slot (8) in the closed position are formed as circular cylindrical portions, and channel-type bearing shells (13) are formed in shoulders (10), via which the slot (8) merges into the widened portion (9), and are intended to receive and support these circular cylindrical portions (16) and are formed so as to be complementary thereto, wherein the channel-type bearing shells (13) are part of a wall of a cylindrical bore (12) extending transversely through the recess (7).

2. A snap hook according to claim 1, **characterised in that** the bridge piece (5) with the laterally projecting pins (6) is provided on one end of the hook part (1), and the corresponding recess (7) is provided in the pivotable locking part (3).

3. A snap hook according to claim 1, **characterised in that** the bore (12) has a diameter corresponding to the diameter of the circular cylindrical portions of the pins (6), and the axis of the bore (12) lies in or slightly below a plane containing the shoulders (10), and the opening width of the channel-type bearing shell (13) is at most 180°.

4. A snap hook according to any one of claims 1 to 3, **characterised in that**, when the hook part (1) is not under load and when the closing part (3) is in the closed position in which the bridge piece (5) rests against the stop (11), the pins (6) and the channel-type shells (13) are spaced apart, and are movable together when the hook part (1) is under load.

## Revendications

1. Mousqueton dans lequel :
- à l'extrémité d'une partie de mousqueton (1) supportant la charge, essentiellement en forme de C, est montée basculante dans le plan de celle-ci, une partie de fermeture (3) qui est maintenue en position de fermeture par une force élastique et qui par son extrémité libre est engagée dans l'autre extrémité de la partie (1) du mousqueton,
- la partie (1) et la partie (3) sont fabriquées à partir de profilés et une extrémité d'une des parties présente une barrette (5) amincie par rapport à la section des profilés avec des saillies latérales constituées par des ergots (6) dont l'étendue axiale, perpendiculairement au plan de la barrette ne dépasse pas le diamètre des profilés, tandis que l'extrémité correspondante de l'autre partie présente un évidement (7) prévu pour accueillir la barrette (5) et ses saillies et portant une butée (11) pour limiter le basculement de la partie de fermeture (3),
- l'évidement (7) est réalisé en correspondance avec la coupe en long de la barrette (5) et ses saillies, et possède une fente (8) partant de la face frontale de l'extrémité, située dans un plan médian et munie d'une partie élargie (9) dont le diamètre, mesuré perpendiculairement à la direction longitudinale de la partie de fermeture est inférieur au diamètre des profilés,
**caractérisé en ce que**
les parties (16) des saillies de la barrette (5) qui, en position de fermeture, sont en face de la fente (8) ont une forme cylindrique circulaire, et dans les épaulements (10) par lesquels la fente (8) se poursuit dans la partie élargie (9) pour accueillir et servir d'appui à ces parties cylindriques (16) sont creusées, en correspondance avec ces parties, des cuvettes de palier (13) en forme de rigoles, qui constituent une partie d'une paroi d'un perçage cylindrique (12) traversant perpendiculairement l'évidement (7).

2. Mousqueton selon la revendication 1,
**caractérisé en ce que**
la barrette (5) avec ses ergots (6) faisant saillie latéralement est prévue à une extrémité de la partie (1) du mousqueton et l'évidement correspondant (7) est prévu dans la partie basculante (3) formant verrou.

3. Mousqueton selon la revendication 1,
**caractérisé en ce que**
le perçage (12) a un diamètre correspondant à celui des parties cylindriques circulaires des ergots (6) et son axe se trouve dans un plan contenant les épaulements (10) ou un peu en dessous de ce plan, l'étendue angulaire de la cuvette de palier (13) en forme de rigole étant de 180° au maximum.

4. Mousqueton selon l'une quelconque des revendications 1 à 3,
**caractérisé en ce que**
lorsque la partie de crochet (1) n'est pas chargée et que la partie de fermeture (3) occupe la position de fermeture dans laquelle la barrette (5) est appliquée sur la butée (11), les ergots (6) et les cuvettes de palier (13) en forme de rigoles présentent entre eux un certain espacement tandis que quand la partie de mousqueton (1) est chargée, ils peuvent venir s'appliquer les uns sur les autres.
